# FASCICULE DE BREVET EUROPEEN

(11) **EP 0 946 843 B1**
(45) Date de publication et mention de la délivrance du brevet: **02.05.2002**
(21) Numéro de dépôt: 97953001.1
(22) Date de dépôt: 23.12.1997
(51) Int. Cl.: F16M 11/12, G09B 9/02

(54) **DISPOSITIF MODULAIRE DE MISE EN MOUVEMENT DE CHARGE SELON AU MOINS TROIS DEGRES DE LIBERTE**
MODULAR EINRICHTUNG ZUR LASTBEWEGUNG MIT MINDESTENS DREI FREIHEITSGRADEN
MODULAR DEVICE FOR STARTING LOADING WITH AT LEAST THREE DEGREES OF MOBILITY

(30) Priorité: 27.12.1996 FR 9616112
(43) Date de publication de la demande: 06.10.1999
(73) Titulaire: Thales, 75008 Paris (FR)
(72) Inventeur: ALET, Robert, Thomson-CSF S.C.P.I., F-94117 Arcueil Cedex (FR); JEZEQUEL, Roland, Thomson-CSF S.C.P.I., F-94117 Arcueil Cedex (FR)
(74) Mandataire: Chaverneff, Vladimir
(86) Numéro de dépôt international: FR9702408
(87) Numéro de publication internationale: WO9829681

(56) Documents cités:
- EP-A- 0 373 029
- FR-A- 2 677 155
- FR-A- 2 745 656
- US-A- 4 887 967
- US-A- 5 022 708
- PATENT ABSTRACTS OF JAPAN vol. 018, no. 571 (C-1267), 2 novembre 1994 & JP 06 210066 A (KONAMI KK), 2 août 1994,

## Description

La présente invention se rapporte à un dispositif modulaire de mise en mouvement de charge selon au moins trois degrés de liberté.

On connaît d'après le brevet français n° 2 745 656 un dispositif compact de mise en mouvement de charge telle qu'une cabine de simulateur, selon trois degrés de liberté. Ce dispositif est mû par trois moteurs électriques et permet de déplacer la charge selon les axes de tangage, de roulis et de déplacement vertical avec des débattements angulaires limités à environ ± 13°, ce qui suffit pour certaines applications de simulation pour lesquelles l'encombrement minimal du dispositif est un critère principal.

Cependant, certaines applications nécessitent des débattements angulaires plus importants, de l'ordre de ± 25°, afin de pouvoir reproduire des sensations spécifiques aux exigences de la simulation. Ces applications sont, par exemple, la simulation de déplacements en terrain très accidenté ou en montagne.

Par ailleurs, on connaît des grands systèmes à six degrés de liberté mettant en oeuvre six vérins, qui permettent d'obtenir des débattements importants. Cependant, ces systèmes ont un coût très élevé, dû essentiellement à l'emploi de vérins hydrauliques et de leur système de commande (centrale et circuits hydrauliques, commande simultanée de six axes).

On connaît d'après le document EP-A-0 373 029 un dispositif de mise en mouvement de charge peu onéreux à trois moteurs électriques sur l'arbre de sortie de chacun desquels est montée une manivelle, reliée par une articulation de type « pantin» à un sommet correspondant d'une plate-forme triangulaire. Ce dispositif connu est satisfaisant dans certaines applications ne nécessitant pas de débattements angulaires (en roulis et/ou en tangage) importants de la plate-forme (inférieurs à environ 13°). Le pantin et les joints de cardan le reliant à la plate-forme empêchent d'imprimer à cette plate-forme des débattements angulaires plus importants.

La présente invention a pour objet un dispositif de mise en mouvement de charge selon au moins les trois degrés de liberté précités, qui soit compact, qui soit simple à réaliser et à commander, d'un prix de revient le plus faible possible, et qui permette d'imposer à la charge des mouvements le plus réalistes possible, avec des débattements angulaires, au moins en roulis et/ou en tangage, relativement importants (jusqu'à environ 25°).

Le dispositif conforme à l'invention comporte au moins trois actionneurs fixés chacun sur une embase de support aux sommets d'un polygone sensiblement régulier, chacun de ces actionneurs entraînant en rotation une manivelle reliée par une liaison articulée comprenant au moins un élément de liaison, à un sommet correspondant d'une plate-forme à laquelle est fixée la charge, les points de fixation de chacun des éléments de liaison sur cette plate-forme formant les sommets d'un polygone ayant une forme sensiblement homothétique de celle du polygone dont les sommets sont occupés par les actionneurs, caractérisé en ce que l'élément de liaison est relié par une de ses extrémités à la plate-forme par une articulation de type rotule, et par l'autre extrémité à au moins deux articulations, qui sont reliées entre elles par un bras, et qui décrivent un cercle autour d'un axe.

De façon avantageuse, lorsque le dispositif comporte trois actionneurs, ils sont disposés selon une configuration en triangle équilatéral, et sont identiques. Egalement de façon avantageuse, les deux extrémités de l'arbre rotatif de sortie, parallèle à l'embase, de chaque actionneur sont reliées chacune à une manivelle, les deux manivelles étant fixées dans la même position angulaire par rapport à l'arbre rotatif, chacune des trois liaisons ayant une forme sensiblement triangulaire, les extrémités de sa base étant reliées par un joint rotatif aux manivelles correspondantes, et son sommet étant relié par une articulation de type rotule au sommet correspondant de la plate-forme.

Selon un mode de réalisation, le dispositif de compensation de charge comporte un élément unique élongé à fonction de ressort réglable, dont une extrémité est reliée par une articulation au centre de l'embase de support, et dont l'autre extrémité est reliée par une autre articulation au centre de gravité de la plate-forme.

Selon un autre mode de réalisation, le dispositif de compensation de charge comprend trois tels éléments élongés articulés à chaque extrémité et reliant respectivement chacun des sommets de la plate-forme au sommet correspondant de l'embase de support.

Selon encore un autre mode de réalisation, le dispositif de compensation de charge comprend trois groupes de deux éléments élongés, articulés à chaque extrémité, les deux éléments de chaque groupe étant reliés, à une de leurs extrémités au bras, et à l'autre extrémité à l'arbre de sortie de l'actionneur.

Selon un autre mode de réalisation de l'invention, chaque liaison articulée comprend essentiellement un pantographe à branche transversale médiane qui est reliée de façon articulée à ladite manivelle.

Dans tous les modes de réalisation, le dispositif de compensation de charge comprend au moins soit un ressort taré, soit un vérin à gaz.

La présente invention sera mieux comprise à la lecture de la description détaillée de plusieurs modes de réalisation, pris à titre d'exemples non limitatifs et illustrés par le dessin annexé, sur lequel :
- la figure 1 est une vue partielle en perspective d'un mode de réalisation du dispositif de l'invention, à trois degrés de liberté,
- la figure 2 est une vue de dessus simplifiée du dispositif de la figure 1,
- la figure 3 est une vue de côté partielle d'un dispositif de compensation de charge relié à la manivelle du dispositif de la figure 1,
- la figure 4 est une vue schématisée et partielle d'un autre mode de réalisation du dispositif de la figure 1, avec liaisons articulées à pantographe, la figure 4A étant une vue en plan d'une telle liaison, déployée,
- la figure 5 est une vue simplifiée en perspective d'un dispositif conforme à l'invention, permettant des mouvements à plus de trois degrés de liberté, et
- la figure 6 est une vue simplifiée d'une variante de réalisation du dispositif de liaison entre actionneurs et plate-forme du dispositif de la figure 1.

La présente invention est décrite ci-dessous en référence à un dispositif de mise en mouvement de cabine de simulateur, mais il est bien entendu qu'elle n'est pas limitée à cette application, et qu'elle peut être mise en oeuvre dans d'autres applications nécessitant de faire bouger les charges selon au moins un degré de liberté, de préférence choisi parmi les mouvements de roulis et/ou de tangage et/ou de translation verticale. L'invention est particulièrement avantageuse lorsque l'on désire réaliser un dispositif de mise en mouvement à bas prix de revient, et débattement relativement important tout en ayant un encombrement réduit.

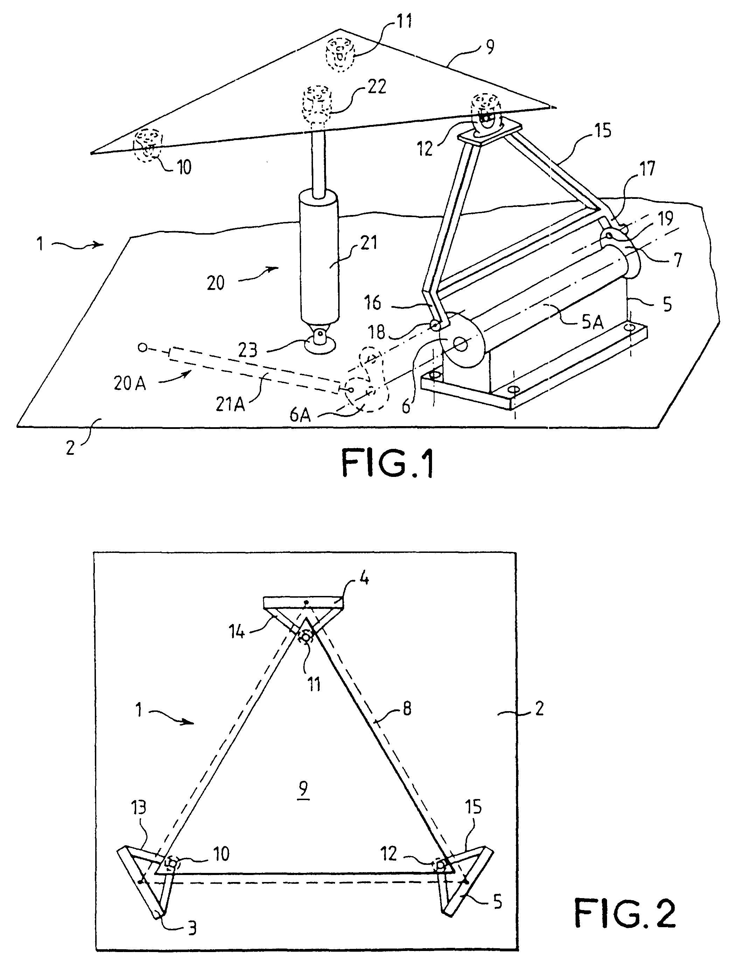

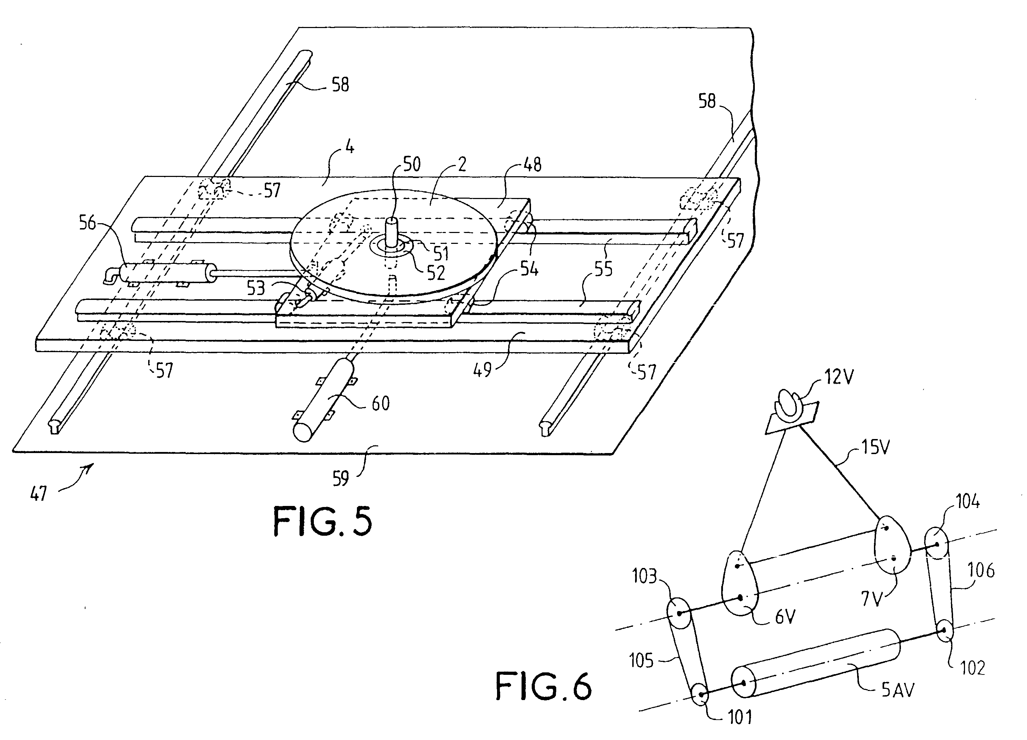

Le dispositif 1 de mise en mouvement représenté en figures 1 et 2 est destiné à mouvoir une cabine de simulateur, dont le poids peut être de l'ordre de 1 à 2 tonnes par exemple. Les mouvements produits par le dispositif 1 sont des mouvements de roulis, de tangage et des mouvements verticaux ou une composition de tels mouvements. Le dispositif de la figure 5, décrit ensuite, permet d'obtenir d'autres mouvements.

Le dispositif 1 de la figure 1 comporte une embase de support 2. Dans le cas présent, l'embase 2 est fixée au sol, alors que dans le cas de la figure 5, elle est mobile. En variante, l'embase 2 peut être supprimée, et les actionneurs, décrits ci-dessous, peuvent être fixés directement au sol. Sur l'embase 2, on fixe trois actionneurs électriques identiques, respectivement référencés 3, 4 et 5. Ces actionneurs, de type connu en soi, et non représentés en détail, comportent chacun un moteur électrique dont les deux extrémités de l'arbre sont "actives", c'est-à-dire entraînent chacune un réducteur. Sur l'arbre de sortie de chaque réducteur, on fixe une manivelle. Les arbres de sortie des réducteurs ont un axe commun 5A, qui est parallèle à l'axe du moteur ou confondu avec celui-ci. Sur la figure 1, on a seulement représenté l'actionneur 5, auquel sont fixées les manivelles 6 et 7. Pour chaque actionneur, les manivelles sont fixées dans la même position angulaire par rapport à l'arbre du moteur. Les actionneurs 3 à 5 sont réalisés et fixés sur l'embase 2 de façon que les arbres de leurs moteurs soient tous parallèles à cette embase. D'autre part, les centres des actionneurs 3 à 5 sont disposés aux sommets d'un triangle 8, qui est, de préférence, équilatéral (voir figure 2). Les arbres des moteurs de ces actionneurs sont respectivement perpendiculaires aux bissectrices des angles du triangle 8 issues des sommets correspondants. Dans le cas où le triangle 8 est isocèle, les arbres des moteurs sont donc respectivement parallèles aux côtés opposés du triangle.

On a représenté sur le dessin une plate-forme 9, de forme triangulaire, de préférence en forme de triangle équilatéral qui peut être soit un élément spécifique sur lequel est fixée la cabine (non représentée) du simulateur, soit le socle même de cette cabine. On fixe sur la face inférieure de la plate-forme 9, près de chacun de ses sommets, trois articulations telles que des rotules, ou, de préférence, des joints de cardan doubles. Ces articulations sont référencées 10 à 12, seule celle référencée 12 étant représentée en figure 1. Chacune de ces articulations 10 à 12 est reliée aux deux manivelles de l'actionneur correspondant par un bras de liaison, respectivement 13 à 15. Chacun de ces bras de liaison a une forme de triangle isocèle dont le sommet "supérieur" (celui situé sur l'axe de symétrie du triangle isocèle) est fixé à l'articulation correspondante de la plate-forme 9. Seul le bras référencé 15 a été représenté en figure 1, et il est relié par son sommet à l'articulation 12. Les deux autres sommets de chaque bras se terminent par deux courts prolongements (16, 17 pour le bras 15) dont les extrémités sont reliées aux extrémités des manivelles correspondantes par une articulation de type rotule. Dans le cas du bras 15, les prolongements 16, 17 sont reliés aux extrémités des manivelles 6, 7 par les articulations 18, 19 dont les axes sont dans le prolongement l'un de l'autre et parallèles à l'axe de l'actionneur 5. Les dimensions de la base du bras (15) sont telles que les prolongements (16, 17) enserrent extérieurement les manivelles (6, 7), et les longueurs de ces prolongements et des manivelles sont déterminées de façon à permettre la rotation complète sur 360° des manivelles, les axes des articulations (18, 19) décrivant un cercle centré sur l'axe 5A. Selon une variante, représentée partiellement en figure 6 (sur laquelle des éléments similaires à ceux de la figure 1 sont désignés par les mêmes références numériques, affectées du suffixe V) on fixe sur les extrémités de l'arbre de sortie de l'actionneur 5AV des poulies primaires 101, 102 entraînant des poulies secondaires 103, 104 par exemple par l'intermédiaire de courroies 105, 106. On fixe sur les arbres des poulies 103, 104 les manivelles 6V, 7V respectivement. Les manivelles 6V, 7V sont disposées entre les poulies 103 et 104. Ces manivelles 6V, 7V entraînent à leur tour le bras triangulaire 15V, qui est relié à la plate-forme 9 par l'articulation 12V. Bien entendu, les deux autres actionneurs (non représentés) sont reliés de la même façon que l'actionneur 5AV à la plate-forme 9.

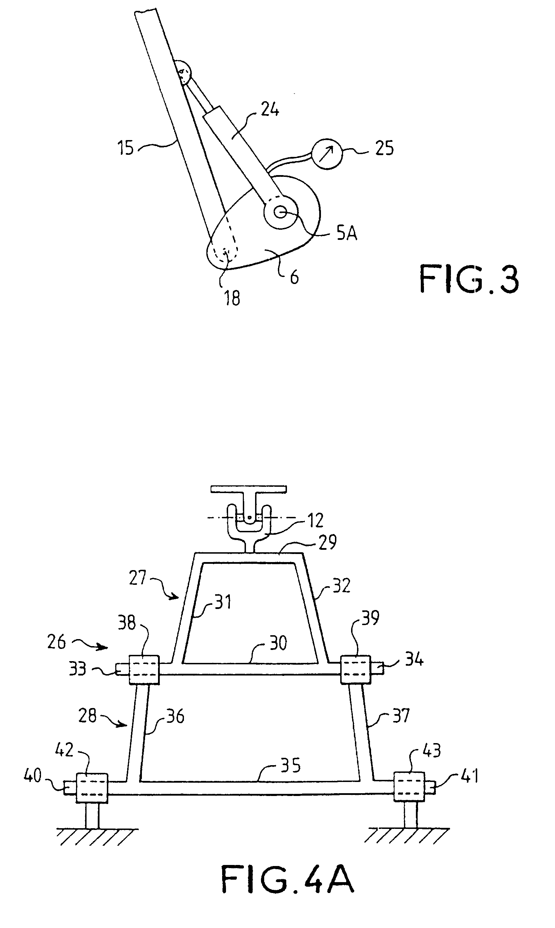

On fixe entre la plate-forme 9 et l'embase 2 un dispositif 20 de compensation du poids de la plate-forme 9 et de la charge reposant sur elle. Dans l'exemple illustré en figure 1, ce dispositif comprend un vérin à gaz 21, qui est relié à la plate-forme et à l'embase par une articulation telle qu'une rotule, ou, de préférence, un double joint de cardan, respectivement 22, 23. Les fixations de ces articulations sont centrées sur les centres de gravité de la plate-forme 9 et du triangle 8, respectivement. En variante, le dispositif 20 comporte un ressort taré. Selon une autre variante, le dispositif 20 comporte trois tels vérins ou ressorts tarés dont les articulations sont fixées près des sommets correspondants des triangles 9 et 8. Selon encore une autre variante, représentée en figure 3, un vérin à gaz ou un ressort taré 24 relie l'axe 5A de chaque manivelle au côté correspondant du bras (15 en figure 3) entraîné par cette manivelle. Bien entendu, le vérin 24 est alimenté par une source de pression de gaz 25, tout comme le vérin 21 de la figure 1. Selon encore une autre variante, le dispositif de mise en mouvement comporte, pour chaque actionneur, deux dispositifs de compensation 20A reliés chacun, d'un côté à la plate-forme 2, et de l'autre côté à l'une des extrémités de son arbre de sortie (arbre 5A sur la figure 1). Un seul de ces dispositifs 20A a été représenté, en traits interrompus, sur la figure 1. Ce dispositif 20A comporte un élément 21A à fonction de ressort (de traction par exemple), qui peut être constitué par un sandow ou un ressort métallique ou un dispositif équivalent. Sa liaison à l'axe 5A est assurée grâce à une came 6A fixée sur l'axe 5A, près de la manivelle 6 et solidarisée en rotation à cette dernière, par exemple grâce à une fixation sur l'axe de l'articulation 18. Bien entendu, la forme de la came 6A et le point d'attache du dispositif 21A sur elle sont déterminés de façon que ce dispositif 21A exerce sur l'axe 5A un couple antagoniste du couple exercé sur cet axe par la plate-forme 9 avec sa charge, via le bras 15, pour la totalité du débattement angulaire maximum de la manivelle 6. Ces dispositifs 20, 20A ou 24 ont pour fonction d'ajuster l'effort de compensation du poids de la charge (plate-forme 9 et charge proprement dite, telle qu'une cabine de simulateur), en fonction de la position dans l'espace du centre de gravité de la charge.

Le dispositif de mise en mouvement décrit ci-dessus permet de mouvoir les charges disposées sur la plate-forme (9) selon des mouvements de tangage et de roulis et des mouvements verticaux (l'embase 2 étant supposée horizontale) grâce à la composition des positions dans l'espace des articulations 10 à 12, c'est-à-dire des positions angulaires des manivelles telles que 6 et 7. Les autres degrés de liberté (lacets et déplacements parallèlement au plan de l'embase 2) ne sont pas possible du fait que les actionneurs 3 à 5 sont fixés à l'embase 2 et que les extrémités des prolongements des bras 13 à 15 (tels que les prolongements 16, 17 du bras 15) décrivent un cercle fixe autour de l'axe de sortie (5A) de l'actionneur correspondant (5). Les amplitudes maximales de ces mouvements sont fonction des longueurs des manivelles (6,7) et des caractéristiques des articulations 10 à 12. Grâce au dispositif de compensation du poids de la charge, l'énergie des actionneurs 3 à 5 n'est utilisée que pour vaincre les forces de frottement et les inerties des parties mobiles du dispositif de l'invention, ce qui entraîne une faible dépense en énergie électrique.

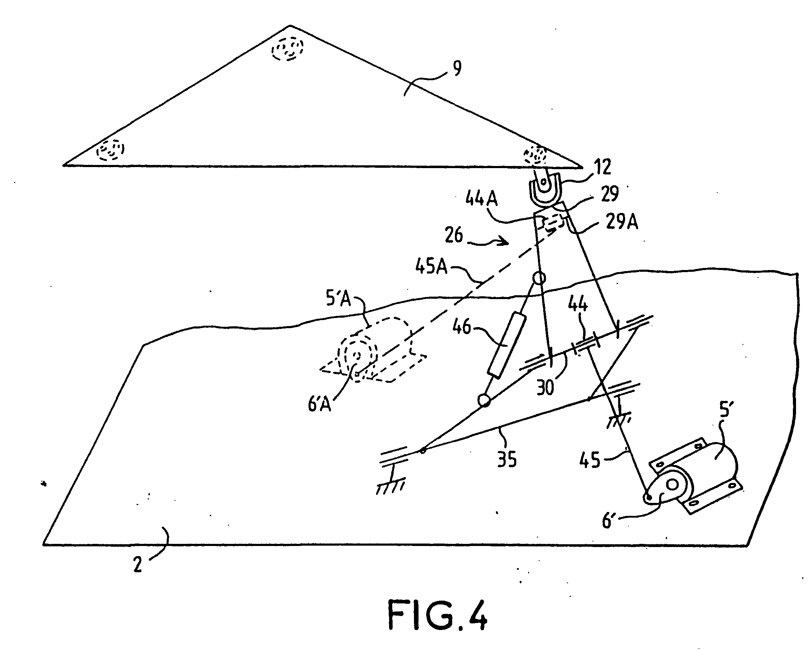

On a représenté en figures 4 et 4A une variante de réalisation des bras 13 à 15 de la figure 1. On a représenté seulement l'un des trois bras, référencé 26, les deux autres bras étant identiques à celui-ci. Ce bras 26 a une forme générale de trapèze rectangle. Il se compose de deux demi-trapèzes rigides 27, 28 de hauteurs sensiblement égales. Le premier de ces deux demi-trapèzes, 27, comporte deux branches transversales parallèles entre elles, 29 et 30, reliées par deux branches obliques 31, 32. L'articulation 12 est fixée, d'un côté à la branche 29, et de l'autre côté à un sommet de la plate-forme 9. La branche 30 se prolonge de chaque côté par une extension 33, 34. Le deuxième demi-trapèze 28 s'articule sur ces extensions 33, 34.

Ce demi-trapèze 28 comporte une branche transversale 35 et deux branches obliques 36, 37 se terminant par des manchons ou paliers 38, 39 enfilés sur les extensions 33, 34 sur lesquelles ces manchons tournent librement avec un jeu minimal. Ainsi, la branche 30 constitue le quatrième côté du trapèze 28. La branche 35 se prolonge de chaque côté par des extensions 40, 41 tournant librement dans des paliers 42, 43 fixés sur l'embase 2. Bien entendu, les branches de chacun des deux demi-trapèzes sont rigidement reliées entre elles.

L'actionneur correspondant, référencé 5', ne comporte, dans le cas présent, qu'un seul arbre de sortie, sur lequel est fixée la manivelle 6'. Un palier 44 est monté sur la branche 30. Une bielle 45 relie la manivelle 6' au palier 44. Selon la variante représentée en traits interrompus en figure 4, l'actionneur 5' est remplacé par un actionneur 5'A identique, mais disposé plus près du centre de l'embase 2. L'actionneur 5'A entraîne une manivelle 6'A reliée par une bielle 45A à un palier 44A monté sur une branche 29A, parallèle à la branche 29 et proche de celle-ci. On réduit ainsi l'encombrement du dispositif de mise en mouvement de l'invention. Les emplacements respectifs de l'actionneur 5' et des paliers 42, 43, ainsi que les dimensions respectives de la manivelle 6', de la tringle 45 et du bras 26 sont tels que la rotation complète d'un tour de la manivelle 6' fait passer le bras 26 d'un état d'extension maximale (demi-trapèzes 27 et 28 coplanaires) à un état de flexion maximale (tel que permis par les articulations 10 à 12 et/ou suffisant pour les besoins du simulateur). Comme pour les modes de réalisation décrits ci-dessus, on prévoit un dispositif de compensation du poids de la charge de la plate-forme 9. Ce dispositif peut être tel que celui de la figure 1. Un autre mode de réalisation est représenté sur la figure 4. Ce dispositif de compensation comprend, pour chaque bras tel que le bras 26, au moins un vérin à gaz ou ressort taré 46 disposé, par exemple, entre une branche oblique d'un demi-trapèze et la branche oblique correspondante de l'autre demi-trapèze du bras. En figure 4, ce vérin est disposé entre les branches 31 et 36. Pour un meilleur équilibre du bras, on peut disposer un autre vérin entre les branches 32 et 37. En variante, on utilise un seul vérin disposé entre les milieux des branches transversales 29 et 35.

Le dispositif de mise en mouvement 47 représenté de façon simplifiée en figure 5 permet d'obtenir d'autres mouvements que ceux permis par le dispositif 1 décrit ci-dessus. Ces mouvements sont au moins l'un des mouvements suivants : mouvement en lacets, mouvement longitudinal (dit "en X") et mouvement transversal (dit "en Y").

Le dispositif 47 comprend, en plus du dispositif 1 (dont on n'a représenté que l'embase 2 pour simplifier le dessin), une ou deux embases mobiles supplémentaires superposées, selon le nombre de mouvements supplémentaires désirés. Le mode de réalisation décrit ci-dessous comprend deux embases mobiles supplémentaires 48 et 49. Les embases 2, 48 et 49 sont des plaques planes.

L'embase 48, de forme carrée par exemple, comporte en son centre un arbre 50 perpendiculaire à sa surface et dirigé vers le haut. Cet arbre 50 traverse une ouverture 51 pratiquée au centre de l'embase 2, qui est par exemple circulaire, et supporte l'embase 2 par un palier 52 permettant à l'embase 2 de tourner librement autour de l'arbre 50 à une distance de l'embase 48 suffisante pour loger entre ces embases un vérin 53, fixé d'un côté, par une articulation, à l'embase 48, et de l'autre côté, par une autre articulation, à l'embase 2, de façon à assurer la rotation, selon une rotation limitée, de l'embase 2 par rapport à l'embase 48, cette dernière étant immobilisée en rotation.

L'embase 48 comporte sur sa face inférieure des roulettes lui permettant de se déplacer longitudinalement (horizontalement, vers la gauche et vers la droite dans la représentation de la figure 5) sur des rails 55 fixés sur l'embase 49. Cette embase 49 a une forme rectangulaire allongée, de longueur suffisante pour permettre de mouvoir l'embase 48, et avec elle l'embase 2, selon des mouvements longitudinaux d'amplitude maximale désirée. A cet effet, un vérin 56, disposé longitudinalement, est fixé entre l'embase 49 et l'embase 48.

A son tour, l'embase 49 comporte sur sa face inférieure des roulettes 57 lui permettant de se déplacer transversalement (perpendiculairement au plan de la figure 5) sur des rails 58 (perpendiculaires aux rails 55) fixés sur un socle 59 solidaire du sol, sous l'action d'un vérin (ou de plusieurs) 60 fixé sur le socle 59 et l'embase 49.

Bien entendu, l'embase 2 peut supporter plus que trois actionneurs. Dans tous les cas, les centres de ces actionneurs sont disposés aux sommets d'un polygone, régulier de préférence. Les solutions à plus de trois actionneurs sont moins économiques que celle à trois, mais peuvent permettre d'imprimer à la charge des mouvements angulaires plus «purs » (c'est-à-dire des mouvements de roulis pur ou de tangage pur).

## Revendications

1. Dispositif de mise en mouvement de charge selon au moins trois degrés de liberté, comportant au moins trois actionneurs (3, 4, 5 ou 5') fixés chacun sur une embase de support (2) aux sommets d'un polygone sensiblement régulier, chacun de ces actionneurs entraînant en rotation une manivelle (6-7, 6', 6'A, 6V-7V) reliée par une liaison articulée (13, 14, 15, 26) comprenant au moins un élément de liaison (13,14,15 ou 26), à un sommet correspondant d'une plate-forme (9) à laquelle est fixée la charge, les points de fixation des liaisons articulées (13, 14, 15 ou 26) sur cette plate-forme formant les sommets d'un polygone ayant une forme sensiblement homothétique de celle du polygone dont les sommets sont occupés par les actionneurs, **caractérisé en ce que** chacun des éléments de liaison (13, 14, 15 ou 26) est relié par une de ses extrémités à la plate-forme par une articulation de type rotule (10, 11, 12), et par l'autre extrémité à au moins deux articulations (18, 19, 38, 39), qui sont reliées entre elles par un bras (15,30), et qui décrivent un cercle autour d'un axe (5A,35).

2. Dispositif selon la revendication 1, **caractérisé en ce qu'**il comprend un dispositif de compensation de charge (20,20A,24,46).

3. Dispositif selon la revendication 1 ou 2, **caractérisé en ce que** chaque actionneur comporte deux arbres de sortie coaxiaux, sur chacun desquels est montée une manivelle (6, 7 ou 6V,7V), les deux manivelles de chaque actionneur étant fixées dans la même position angulaire par rapport à l'axe commun des arbres de sortie, chacun des éléments de liaison (13, 14, 15) ayant une forme sensiblement triangulaire dont les extrémités (16, 17) sont reliées par un joint rotatif (18, 19) aux manivelles correspondantes, et dont le sommet est relié par une articulation de type rotule (12) au sommet correspondant de la plate-forme.

4. Dispositif selon la revendication 1, **caractérisé en ce que** chaque liaison articulée comprend un pantographe (26) formé de deux demi-trapèzes rigides (27, 28) mutuellement articulés autour d'une branche transversale médiane (30) qui est reliée de façon articulée (44, 45) à la manivelle (6'), l'un des deux demi-trapèzes (27) constituant ledit élément de liaison, et l'autre (28) étant monté sur des paliers (42, 43) fixés sur l'embase.

5. Dispositif selon l'une des revendications précédentes, **caractérisé en ce qu'**il comporte trois actionneurs identiques et disposés selon une configuration en triangle équilatéral (8).

6. Dispositif selon l'une des revendications 2 à 5, **caractérisé en ce que** le dispositif de compensation de charge comporte un élément unique (21) élongé à fonction de ressort réglable, dont une extrémité est reliée par une articulation (23) au centre de l'embase de support (2), et dont l'autre extrémité est reliée par une autre articulation (22) au centre de gravité de la plate-forme (9).

7. Dispositif selon l'une des revendications 2 à 5, **caractérisé en ce que** le dispositif de compensation de charge comprend trois éléments élongés à fonction de ressort réglable articulés à chaque extrémité et reliant respectivement chacun des sommets de la plate-forme au sommet correspondant de l'embase de support.

8. Dispositif selon l'une des revendications 2 à 5, **caractérisé en ce que** le dispositif de compensation de charge comprend trois groupes de deux éléments élongés à fonction de ressort réglable (24), articulés à chaque extrémité, les deux éléments de chaque groupe étant reliés, à une de leurs extrémités, au bras, et à l'autre extrémité à l'arbre de sortie (5A) de l'actionneur.

9. Dispositif selon l'une des revendications 2 à 5, **caractérisé en ce que** le dispositif de compensation de charge comprend, pour chaque actionneur, au moins un élément (21A) à fonction de ressort disposé entre l'embase (2) et l'arbre de sortie de l'actionneur (5A).

10. Dispositif selon la revendication 4 ou 5, **caractérisé en ce que** le dispositif de compensation de charge comprend, pour chaque liaison articulée (26), au moins un élément élongé à fonction de ressort réglable disposé entre deux branches (27, 28) du pantographe.

11. Dispositif selon l'une des revendications précédentes, **caractérisé en ce qu'**il comprend une deuxième embase (48), disposée sous la première (2) à laquelle est fixé un arbre (50) traversant la première en son centre, qui est mobile en rotation autour de cet arbre, sous l'action d'un vérin (53) reliant ces deux embases.

12. Dispositif selon la revendication 11, **caractérisé en ce que** la deuxième embase est munie de roulettes (54) se déplaçant sur des premiers rails (55) fixés sur une troisième embase (49).

13. Dispositif selon la revendication 12, **caractérisé en ce que** la troisième embase comporte des roulettes se déplaçant sur des seconds rails (58) fixés sur un socle (59) et perpendiculaires aux premiers rails.

## Patentansprüche

1. Vorrichtung, um eine Last gemäß mindestens drei Freiheitsgraden in Bewegung zu versetzen, mit mindestens drei Betätigungsorganen (3, 4, 5 oder 5'), die je auf einer Grund-Trageplatte (2) an den Ecken eines im wesentlichen gleichschenkligen Vielecks befestigt sind und eine Kurbel (6-7, 6', 6'A, 6V-7V) in Drehung versetzen, die über eine Gelenkverbindung (13, 14, 15, 26) mit mindestens einem Verbindungselement (13, 14, 15 oder 26) mit einem entsprechenden Eck einer Plattform (9) gekoppelt ist, auf der die Last befestigt ist, wobei die Befestigungspunkte der Gelenkverbindungen (13, 14, 15 oder 26) auf dieser Plattform die Ecken eines Vielecks bilden, dessen Form zu der des Vielecks, dessen Ecken von den Betätigungsorganen besetzt sind, homothetisch ist, **dadurch gekennzeichnet, daß** jedes der Verbindungselemente (13, 14, 15 oder 26) mit einem seiner Enden über ein Kugelgelenk (10, 11, 12) an der Plattform und mit dem anderen Ende an mindestens zwei Gelenken (18, 19, 38, 39) befestigt ist, die miteinander über einen Arm (15, 30) verbunden sind und einen Kreis um eine Achse (5A,35) beschreiben.

2. Vorrichtung nach Anspruch 1, **dadurch gekennzeichnet, daß** sie eine Vorrichtung (20, 20A, 24, 46) zur Kompensation der Last besitzt.

3. Vorrichtung nach Anspruch 1 oder 2, **dadurch gekennzeichnet, daß** jedes Betätigungsorgan zwei koaxiale Ausgangswellen besitzt, auf denen je eine Kurbel (6, 7 oder 6V, 7V) montiert ist, wobei die beiden Kurbeln jedes Betätigungsorgans in gleichen Winkelpositionen bezüglich der gemeinsamen Achse der Ausgangswellen befestigt sind und jedes der Verbindungselemente (13, 14, 15) im wesentlichen die Form eines Dreiecks besitzt, dessen Basisecken (16, 17) über eine Drehverbindung (18, 19) mit der entsprechenden Kurbel gekoppelt sind, während die Spitze über ein Kugelgelenk (12) mit der entsprechenden Ecke der Plattform verbunden ist.

4. Vorrichtung nach Anspruch 1, **dadurch gekennzeichnet, daß** jede Gelenkverbindung einen Panthographen (26) enthält, der aus zwei starren Halbtrapezen (27, 28) besteht, die miteinander um einen mittleren Querzweig (30) gelenkig verbunden sind, wobei der mittlere Querzweig (30) über eine Gelenkverbindung (44, 45) mit der Kurbel (6') verbunden ist und wobei eines der Halbtrapeze (27) das Verbindungselement bildet und das andere Halbtrapez (28) in an der Grundplatte befestigten Lagern (42, 43) verankert ist.

5. Vorrichtung nach einem der vorstehenden Ansprüche, **dadurch gekennzeichnet, daß** sie drei identische Betätigungsorgane enthält, die gemäß einem gleichschenkligen Dreieck (8) angeordnet sind.

6. Vorrichtung nach einem der Ansprüche 2 bis 5, **dadurch gekennzeichnet, daß** die Vorrichtung zur Kompensation der Last ein einziges längliches Element (21) enthält, das eine regelbare Federfunktion besitzt und dessen erstes Ende über ein Gelenk (23) im Zentrum der Grund-Trageplatte (2) befestigt ist, während das zweite Ende über ein weiteres Gelenk (22) im Schwerpunkt der Plattform (9) verankert ist.

7. Vorrichtung nach einem der Ansprüche 2 bis 5, **dadurch gekennzeichnet, daß** die Vorrichtung zur Kompensation der Last drei längliche Elemente enthält, die eine regelbare Federfunktion sowie an jedem Ende ein Gelenk besitzen und jede der Ecken der Plattform mit einer entsprechenden Ecke der Grund-Trageplatte verbinden.

8. Vorrichtung nach einem der Ansprüche 2 bis 5, **dadurch gekennzeichnet, daß** die Vorrichtung zur Kompensation der Last drei Gruppen von länglichen Elementen (24) enthält, die eine regelbare Federfunktion sowie an jedem Ende ein gelenk besitzen, wobei die beiden Elemente jeder Gruppe mit einem ihrer Enden am Arm und mit dem anderen Ende an der Ausgangswelle (5A) des Betätigungsorgans verankert sind.

9. Vorrichtung nach einem der Ansprüche 2 bis 5, **dadurch gekennzeichnet, daß** die Vorrichtung zur Kompensation der Last für jedes Betätigungsorgan mindestens ein Element (21A) aufweist, das eine Federfunktion besitzt und zwischen der Grundplatte (2) und der Ausgangswelle des Betätigungsorgans (5A) angeordnet ist.

10. Vorrichtung nach einem der Ansprüche 4 und 5, **dadurch gekennzeichnet, daß** die Vorrichtung zur Kompensation der Last für jede Gelenkverbindung (26) mindestens ein längliches Element enthält, das eine regelbare Federfunktion besitzt und zwischen zwei Armen (27, 28) des Panthographen sitzt.

11. Vorrichtung nach einem der vorstehenden Ansprüche, **dadurch gekennzeichnet, daß** sie eine zweite Grundplatte (48) enthält, die unter der ersten Grundplatte (2) angeordnet ist und an der eine Welle (50) befestigt ist, die die erste Grundplatte zentral durchquert, sodaß diese letztgenannte Grundplatte unter der Wirkung eines diese beiden Grundplatten verbindenden Zylinders (53) in Drehrichtung um diese Welle beweglich ist.

12. Vorrichtung nach Anspruch 11, **dadurch gekennzeichnet, daß** die zweite Grundplatte Rollen (54) enthält, die auf an einer dritten Grundplatte (49) befestigten ersten Schienen (55) laufen.

13. Vorrichtung nach Anspruch 12, **dadurch gekennzeichnet, daß** die dritte Grundplatte Rollen aufweist, die auf auf einem Sockel (59) befestigten und senkrecht zu den ersten Schienen verlaufenden zweiten Schienen (58) laufen.

## Claims

1. Device for setting a load in motion in at least three degrees of freedom, comprising at least three actuators (3, 4, 5 or 5') each fixed to a support baseplate (2) at the vertices of an approximately regular polygon, each of these actuators driving the rotation of a crank (6-7, 6', 6'A, 6V-7V) connected by an articulated link (13, 14, 15, 26) comprising at least one linking element (13, 14, 15 or 26) to a corresponding vertex of a platform (9) to which the load is fixed, the points of attachment of the articulated links (13, 14, 15 or 26) to this platform forming the vertices of a polygon of a shape which is approximately homothetic with that of the polygon the vertices of which are occupied by the actuators, **characterized in that** each of the linking elements (13, 14, 15 or 26) is connected by one of its ends to the platform by an articulation of the ball joint type (10, 11, 12) and, by the other end, to at least two articulations (18, 19, 38, 39) which are connected together by an arm (15, 30) and which describe a circle about an axis (5A, 35).

2. Device according to Claim 1, **characterized in that** it comprises a load compensating device (20, 20A, 24, 46).

3. Device according to Claim 1 or 2, **characterized in that** each actuator comprises two coaxial output shafts on each of which is mounted a crank (6, 7 or 6V, 7V), the two cranks of each actuator being fixed in the same angular position with respect to the common axis of the output shafts, each of the linking elements (13, 14, 15) having an approximately triangular shape, the ends (16, 17) of which are connected by a rotary joint (18, 19) to the corresponding cranks, and the vertex of which is connected by an articulation of the ball joint type (12) to the corresponding vertex of the platform.

4. Device according to Claim 1, **characterized in that** each articulated link comprises a pantograph (26) formed of two rigid half trapeziums (27, 28) articulated together about a central transverse branch (30) which is connected in an articulated fashion (44, 45) to the crank (6'), one of the two half trapeziums (27) constituting the said linking element and the other (28) being mounted on bearings (42, 43) fixed to the baseplate.

5. Device according to one of the preceding claims, **characterized in that** it comprises three identical actuators arranged in an equilateral-triangle configuration (8).

6. Device according to one of Claims 2 to 5, **characterized in that** the load compensating device comprises a single elongate element (21) with the function of an adjustable spring, one end of which is connected by an articulation (23) to the centre of the support baseplate (2) and the other end of which is connected by another articulation (22) to the centre of gravity of the platform (9).

7. Device according to one of Claims 2 to 5, **characterized in that** the load compensating device comprises three elongate elements with the function of adjustable springs, articulated at each end and respectively connecting each of the vertices of the platform to the corresponding vertex of the support baseplate.

8. Device according to one of Claims 2 to 5, **characterized in that** the load compensating device comprises three groups of two elongate elements with the function of adjustable springs (24), articulated at each end, the two elements of each group being connected, at one of their ends, to the arm and, at the other end, to the output shaft (5A) of the actuator.

9. Device according to one of Claims 2 to 5, **characterized in that** the load compensating device comprises, for each actuator, at least one element (21A) with the function of a spring arranged between the baseplate (2) and the output shaft of the actuator (5A).

10. Device according to Claim 4 or 5, **characterized in that** the load compensating device comprises, for each articulated link (26), at least one elongate element with the function of adjustable springs arranged between two branches (27, 28) of the pantograph.

11. Device according to one of the preceding claims, **characterized in that** it comprises a second baseplate (48) arranged under the first (2) to which is fixed a shaft (50) passing through the first at its centre, which can rotate about this shaft under the action of a ram (53) connecting these two baseplates.

12. Device according to Claim 11, **characterized in that** the second baseplate is equipped with rollers (54) running along first rails (55) fixed on a third baseplate (49).

13. Device according to Claim 12, **characterized in that** the third baseplate comprises rollers running along second rails (58) fixed to a bed plate (59) and perpendicular to the first rails.
